# EUROPEAN PATENT SPECIFICATION

(11) **EP 2 768 364 B1**
(45) Date of publication and mention of the grant of the patent: **16.09.2015**
(21) Application number: 12772103.3
(22) Date of filing: 08.10.2012
(51) Int. Cl.: A47J 37/07

(54) **COOKING APPLIANCE WITH GRILL AND WITH A GREASE COLLECTOR TRAY**
KOCHVORRICHTUNG MIT GRILL UND EINER FETTAUFFANGWANNE
APPAREIL DE CUISSON AVEC GRILL ET BAC RÉCUPÉRATEUR DE GRAISSE

(30) Priority: 18.10.2011 IT VE20110069
(43) Date of publication of application: 27.08.2014
(73) Proprietor: Arris Catering Equipment S.r.l., 35010 Cadoneghe (IT)
(72) Inventor: CALZAVARA, Tiziano, I-35011 Campodarsego (IT)
(74) Representative: Piovesana, Paolo
(86) International application number: PCT/EP2012/069892
(87) International publication number: WO 2013/057004

(56) References cited:
- EP-A1- 0 928 589
- FR-A1- 2 899 455

## Description

The present invention relates to a cooking appliance with grill and with a grease collector tray.

Cooking appliances with grill and with a grease collector tray are known. Such an appliance is disclosed in EP-A-928589.

They are divided into appliances for domestic use and appliances of professional type for communities.

Appliances for domestic use generally comprise a grill on which the food to be cooked is placed, an electrical resistance element positioned below the grill and a tray containing water positioned below the electrical resistance element to collect grease which escapes from the food during cooking. Often instead of one grill, a pair of grills are provided, between which the food to be cooked is interposed and is rotated through 180° together with the pair of grills, such that both its sides face the electrical resistance element.

Appliances for professional use generally comprise a grill formed from a plurality of parallel electrical resistance elements or a plurality of linear gas burners, able to create in all cases a discontinuous surface having the double function of supporting and cooking the food positioned on it.

Below the grill there is provided, as in the case of domestic cooking appliances, a water-containing tray in which the cooking greases are collected.

Independently of the type of heat source used, known cooking appliances of professional type with grill are intended for prolonged use for lengthy time periods, and inevitably involve more intense thermal stresses on all the appliance components.

In particular this prolonged use, with heat sources facing the free surface of the water contained in the tray, leads in time to the evaporation of this water, and the need to frequently top it up. This is currently done manually by the operator, who visually checks the water level through the grill and finally, during the interval between one cooking and the next, extracts the tray if of withdrawable drawer type.

This operation is uncomfortable and a source of risk because if the tray remains without water, it becomes overheated with consequent permanent deformation, which can sometimes create an obstacle to tray extraction, hinder its cleaning after use, and generally hinder correct operation of the appliance itself.

The main object of the invention is to eliminate this drawback and essentially to prevent the tray from remaining without water.

Other objects of the invention are to provide a cooking appliance with grill, of professional type, which compared with similar traditional appliances, is safer in operation, is able to cook food more uniformly, is more versatile and in practice ensures correct and regular operation, independently of the type and characteristics of the food to be cooked.

All these and other objects, which will be apparent from the ensuing description, are attained, according to the invention, by a cooking appliance with grill and with a grease collector tray as described in claim 1.

The present invention is further clarified hereinafter with reference to the accompanying drawings, in which:

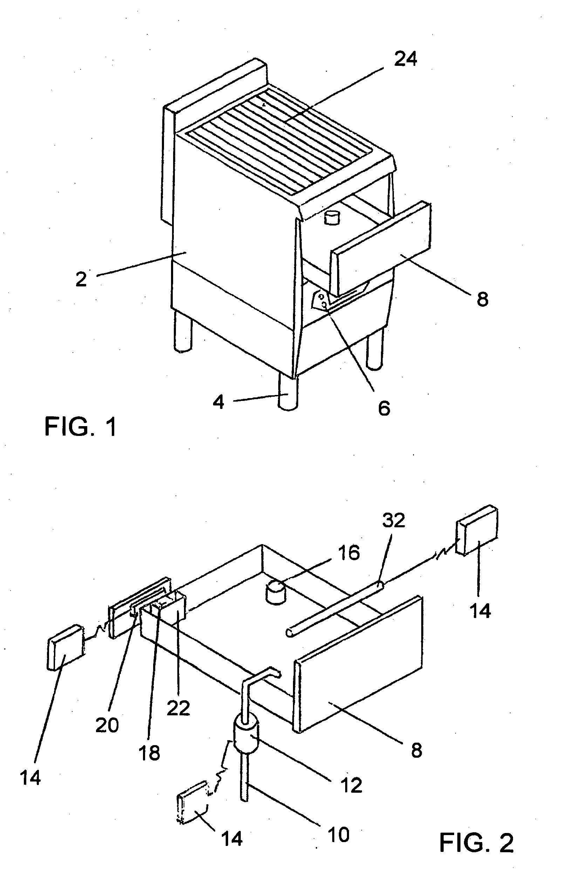

- Figure 1: is an overall perspective view of a cooking appliance with grill according to the invention,
- Figure 2: is a schematic perspective view of just the extractable water-containing tray,

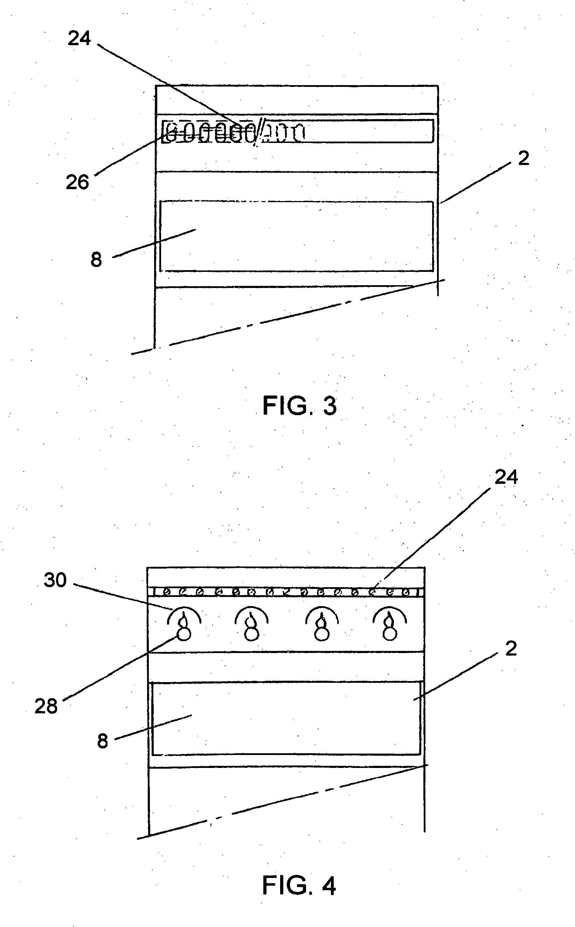

- Figure 3: is a partial section through that embodiment of the appliance comprising an electric grill,
- Figure 4: is a section through that embodiment comprising a gas grill,
- Figure 5: is a schematic view of the cooking appliance, also provided with an adjustable upper grill, in the raised condition,
- Figure 6: shows it in the same view as Figure 5 but in the lowered condition, and
- Figure 7: is a detailed view of the system for adjusting the appliance upper grill relative to the lower grill.

As can be seen from the figures, the cooking appliance according to the invention comprises a panelled base structure 2 provided with four legs for its resting on the floor.

A control board 6 comprising a display and pushbuttons for setting the various functions and the operating parameters is applied to the front panel of the base structure 2.

A compartment for an extractable water-containing tray 8 is provided in the upper part of the base structure 2. The compartment is provided with a water feed conduit 10 connected to the external mains and provided with a solenoid shutoff valve 12 connected to a control unit 14 operable by the operator via the control board 6.

The water tray 8 is also provided in its base with an overflow 16 connected to the drain circuit.

Finally, the water tray 8 is provided with a level control device, which in its most simple form consists of a float slidable within its own vertical guide and acting on a transducer 20 connected to the control unit 14.

The float can be advantageously surrounded by an anti-grease filter 22, the function of which is to prevent grease, originating from the food during cooking and collected in the tray 8, from coming into contact with the float 18 and preventing its correct operation.

In a position overlying the tray 8 the base structure 2 supports a grill 24. It can consist of a series of armoured electrical resistance elements 26 disposed mutually parallel, or of a metal grill overlying a plurality of linear gas burners 28, with which arched plates 30 are associated to radiate the heat towards the overlying grill 24.

In all cases, independently of the type of grill 24, it consists of a plurality of side-by-side rectilinear elements which support the food to be cooked but which are spaced apart to such an extent as to allow the grease which develops during cooking to pass and fall into the underlying tray 8.

Advantageously, the surface of those elements forming the grill 24 which are intended to come into contact with the food to be cooked is covered with a layer of anti-adherent material.

A probe 32 able to measure the surrounding relative humidity is applied to the base structure 2, between the tray 8 and the lower grill 24. It is operationally connected to the control unit 14 for correct control of the appliance operation, as will be apparent hereinafter.

If the lower grill 24 is of electrical type, a support structure 34 for an upper grill 36, also of electrical type, can be advantageously hinged to the base structure 2.

The connection between the grill 36 and its support structure 34 is achieved by bars 38 parallelogram-hinged to both, in order to allow purely translational movements of said grill 36 relative to the structure 34, and consequent adjustment of the distance of said grill from the lower grill 24, when the structure 34 is lowered.

It is advantageous if these bars 38 are also hinged to further longitudinal bars 40, connected together by a handgrip able to enable the operator to manually control the translational movements of the grill 36 relative to the structure 34.

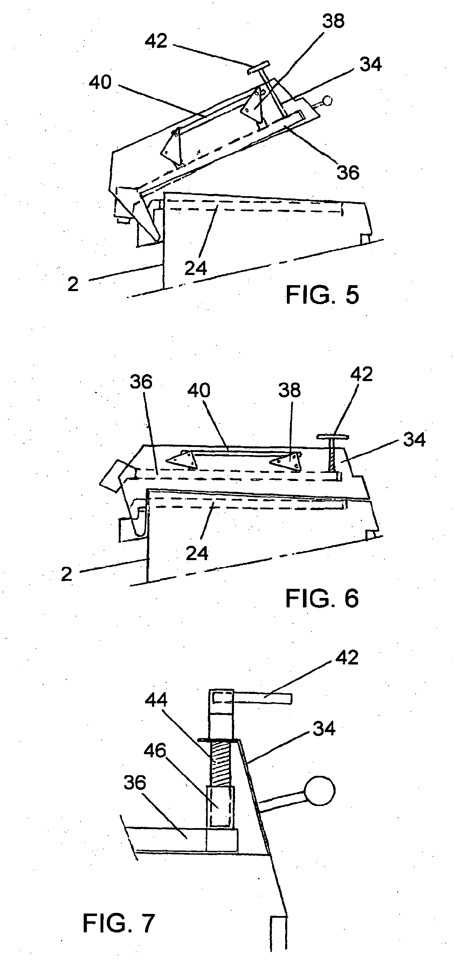

In order to create a stop for the lower position of the grill 36, to prevent a squashing effect on the food positioned on the lower grill 24, the invention also comprises a stop member operable by a handwheel. In Figures 5 and 6 only the presence of an adjustment handwheel 42 is indicated, whereas in Figure 7 the entire adjustment system is shown in detail. It comprises the adjustment handwheel 42, which is provided with a threaded pin 44 engaging in a threaded sleeve 46 rigid with the upper grill 36; the height adjustment of said grill is achieved by supporting an annular lower portion of the handwheel 42 in a portion of the structure 34, traversed freely by said threaded pin 44.

The cooking appliance according to the invention operates in the following manner: when the appliance is switched on, the control board firstly sets the programme on the basis of the desired cooking cycle. In this stage the tray 8 is without water, having been emptied of all water on termination of the previous use, and the tray 8 and grill 24 having been cleaned of grease and food residues.

On termination of programme setting, when the appliance starts operating, the control unit 14 firstly opens the solenoid valve 12 positioned in the conduit 10 feeding water into the tray 8, for a predetermined time corresponding to the introduction of water into the tray 8 to a level below that scheduled for normal operation.

The heating elements of the grill 24 and also of the grill 32, if provided, are then automatically activated.

In this manner the normal operating temperature is reached, with the heating of the water contained in the tray 8 also ensuring melting of any grease residues frequently found on the float 18, notwithstanding the presence of the filter 22 and the care taken during the cleaning operations.

Only after normal operating temperature is reached is the transducer 20 activated, to cause the correct water level to be reached and maintained in the tray 8.

If cooking with humidity control is required, the probe 32 is also activated to measure the humidity of the air immediately below the lower grill 24 and, if the measurement is higher than that set, to cause more cold water to be fed into the tray 8 to reduce its temperature and to consequently return the humidity of the environment to the desired value.

During this stage the transducer must evidently be deactivated, with the overflow 16 then intervening to maintain the water level in the tray 8 at a value less than that which would otherwise result in overflowing.

From the aforegoing description it is apparent that the cooking appliance with grill according to the invention is much more advantageous that appliances with traditional grills, and in particular:
- it ensures maintenance of the correct water level in the tray 8 without any manual intervention by the operator,
- it ensures correct operation even if grease residues are present on the float 18,
- it eliminates any risk of accidental lack of water in the tray.

In addition, depending on the particular characteristics provided, it can also offer other advantages, namely:
- control of environmental humidity,
- elimination of any risk of food residues remaining adhering to the grill,
- automatic adaptation of the upper grill to foods of different thicknesses,
- usability with electrical and gas grills.

## Claims

1. A cooking appliance with grill and with a grease collector tray comprising, on a base structure 2:
- a grill (24) consisting of a plurality of spaced-apart heating elements,
- an extractable tray(8) positioned below said grill (24),
- a control unit (14) for the various operating parameters,
- an inlet (10) in the tray (8) for water originating from an external feed,
- an overflow device (16) applied to said tray (8) and connected to an external drain circuit,
- a plurality of commands acting on said control unit (14) for setting the correct operating parameters,
**characterized by** further comprising:
- a level sensor (18) applied to said tray (8),
- a transducer (20) for the signal generated by said level sensor (18), acting via said control unit (14) on shutoff means (12) provided in the feed circuit of said tray,
- activation means for said shutoff means (12), acting in the sense of feeding water into said tray (8) at the beginning of the appliance operating period, to a level below the normal operating level, then powering the heating elements of the grill (24), and finally activating said transducer (20) to feed water into said tray until the normal operating level is reached.

2. An appliance as claimed in claim 1, **characterized in that** the grill (24) consists of a plurality of armoured electrical resistance elements.

3. An appliance as claimed in claim 1, **characterized in that** the grill (24) is positioned above a plurality of linear burners (28), each overlaid by a radiant cover plate (30).

4. An appliance as claimed in one or more of the preceding claims, **characterized in that** said level sensor (18) consists of a float cooperating with said transducer (20).

5. An appliance as claimed in one or more of the preceding claims, **characterized in that** said level sensor (18) is surrounded by an anti-grease filter (22).

6. An appliance as claimed in one or more of the preceding claims, **characterized in that** associated with said tray (8) there is a humidity sensor (32) connected to said control unit (14) and acting thereby on said shutoff means (12).

7. An appliance as claimed in one or more of the preceding claims, **characterized by** comprising a second grill (36) supported by a structure (34) hinged to said base structure (2).

8. An appliance as claimed in the preceding claim, **characterized in that** said second grill (36) is connected to its own support structure (34) by bars (38) parallelogram-hinged between the two.

9. An appliance as claimed in the preceding claim, **characterized in that** those bars (38) applied to the same side of the second grill (36) are connected together by a longitudinal bar (40).

10. An appliance as claimed in one or more of the preceding claims 7-9, **characterized in that** the support structure (34) of said second grill (36) is provided with adjustable means (42, 44, 46) for defining the lower end-of-travel position of said second grill.

11. An appliance as claimed in one or more of the preceding claims 7-10, **characterized in that** each grill (24, 36) is covered, at least in those parts intended to come into contact with the food to be cooked, with a layer of anti-adherent material.

## Patentansprüche

1. Kochvorrichtung mit Grill und mit einer Fettauffangwanne, die auf einer Basisstruktur 2 Folgendes umfasst:
- einen Grill (24), der aus mehreren voneinander beabstandeten Heizelementen besteht,
- eine ausziehbare Wanne (8), die unter dem Grill (24) angeordnet ist,
- eine Steuereinheit (14) für die verschiedenen Betriebsparameter,
- einen Einlass (10) in die Wanne (8) für Wasser, das von einem externen Zulauf stammt,
- eine Überlaufvorrichtung (16), die an der Wanne (8) angebracht und mit einem externen Abflusskreis verbunden ist,
- mehrere Befehle, die auf die Steuereinheit (14) wirken, um die korrekten Betriebsparameter einzustellen,
**dadurch gekennzeichnet, dass** sie des Weiteren Folgendes umfasst:
- einen Niveausensor (18), der an der Wanne (8) angebracht ist,
- einen Messwertgeber (20) für das durch den Niveausensor (18) generierte Signal, das über die Steuereinheit (14) auf ein Absperrmittel (12) wirkt, das in dem Zulaufkreis der Wanne angeordnet ist,
- ein Aktivierungsmittel für das Absperrmittel (12), das in Fließrichtung des in die Wanne (8) zuströmenden Wassers am Beginn des Betriebszeitraums der Vorrichtung bis auf einen Pegel unterhalb des normalen Betriebspegels wirkt, anschließend die Heizelemente des Grills (24) einschaltet und zum Schluss den Messwertgeber (20) aktiviert, um Wasser in die Wanne laufen zu lassen, bis der normale Betriebspegel erreicht ist.

2. Vorrichtung nach Anspruch 1, **dadurch gekennzeichnet, dass** der Grill (24) aus mehreren gepanzerten elektrischen Widerstandselementen besteht.

3. Vorrichtung nach Anspruch 1, **dadurch gekennzeichnet, dass** der Grill (24) oberhalb mehrerer linearer Brenner (28) positioniert ist, über denen jeweils eine abstrahlende Deckplatte (30) liegt.

4. Vorrichtung nach einem oder mehreren der vorangehenden Ansprüche, **dadurch gekennzeichnet, dass** der Niveausensor (18) aus einem Schwimmer besteht, der mit dem Messwertgeber (20) zusammenwirkt.

5. Vorrichtung nach einem oder mehreren der vorangehenden Ansprüche, **dadurch gekennzeichnet, dass** der Niveausensor (18) von einem Fettschutzfilter (22) umgeben ist.

6. Vorrichtung nach einem oder mehreren der vorangehenden Ansprüche, **dadurch gekennzeichnet, dass** an der Wanne (8) ein Feuchtigkeitssensor (32) angebracht ist, der mit der Steuereinheit (14) verbunden ist und dadurch auf das Absperrmittel (12) wirkt.

7. Vorrichtung nach einem oder mehreren der vorangehenden Ansprüche, **dadurch gekennzeichnet, dass** sie einen zweiten Grill (36) umfasst, der durch eine Struktur (34) gestützt wird, die an der Basisstruktur (2) angelenkt ist.

8. Vorrichtung nach dem vorangehenden Anspruch, **dadurch gekennzeichnet, dass** der zweite Grill (36) mit seiner eigenen Stützstruktur (34) durch Stäbe (38) verbunden ist, die parallelogrammartig zwischen den beiden angelenkt sind.

9. Vorrichtung nach dem vorangehenden Anspruch, **dadurch gekennzeichnet, dass** jene Stäbe (38), die auf derselben Seite des zweiten Grills (36) angebracht sind, durch einen Längsstab (40) miteinander verbunden sind.

10. Vorrichtung nach einem oder mehreren der vorangehenden Ansprüche 7-9, **dadurch gekennzeichnet, dass** die Stützstruktur (34) des zweiten Grills (36) mit einem verstellbaren Mittel (42, 44, 46) versehen ist, um die untere Endanschlagposition des zweiten Grills zu definieren.

11. Vorrichtung nach einem oder mehreren der vorangehenden Ansprüche 7-10, **dadurch gekennzeichnet, dass** jeder Grill (24, 36) wenigstens an den Stellen, die mit den zuzubereitenden Lebensmitteln in Kontakt kommen sollen, mit einer Schicht aus einem Antihaftmaterial beschichtet ist.

## Revendications

1. Appareil de cuisson équipé d'un grill et d'un bac récupérateur de graisse, comprenant, sur une structure de base 2:
- un grill (24) constitué d'une pluralité d'éléments de chauffage espacés les uns des autres;
- un bac extractible (8) positionné en dessous dudit grill (24);
- une unité de commande (14) pour les différents paramètres de fonctionnement;
- une entrée (10) dans le bac (8) pour de l'eau en provenance d'une alimentation externe;
- un dispositif de débordement (16) appliqué audit bac (8) et connecté à un circuit de drainage externe;
- une pluralité de commandes qui agissent sur ladite unité de commande (14) pour régler les paramètres de fonctionnement corrects,
**caractérisé en ce qu'**il comprend en outre:
- un capteur de niveau (18) qui est appliqué audit bac (8);
- un transducteur (20) pour le signal généré par ledit capteur de niveau (18), qui agit par l'intermédiaire de l'unité de commande (14) sur des moyens de coupure (12) prévus dans le circuit d'alimentation dudit bac; et
- des moyens d'activation pour lesdits moyens de coupure (12), qui agissent dans le sens de l'alimentation d'eau dans ledit bac (8) au début de la période de fonctionnement de l'appareil jusqu'à un niveau situé en dessous du niveau de fonctionnement normal, qui alimentent ensuite les éléments de chauffage du grill (24), et qui activent finalement ledit transducteur (20) pour alimenter ledit bac en eau jusqu'à ce que le niveau de fonctionnement normal soit atteint.

2. Appareil selon la revendication 1, **caractérisé en ce que** le grill (24) est constitué par une pluralité d'éléments de résistance électrique blindés.

3. Appareil selon la revendication 1 **caractérisé en ce que** le grill (24) est positionné au-dessus d'une pluralité de brûleurs linéaires (28) recouverts chacun par une plaque-couvercle radiante (30).

4. Appareil selon une ou plusieurs des revendications précédentes, **caractérisé en ce que** ledit capteur de niveau (18) est constitué d'un flotteur qui coopère avec ledit transducteur (20).

5. Appareil selon une ou plusieurs des revendications précédentes, **caractérisé en ce que** ledit capteur de niveau (18) est entouré par un filtre anti-graisse (22).

6. Appareil selon une ou plusieurs des revendications précédentes, **caractérisé en ce qu'**un capteur d'humidité (32) qui est connecté à ladite unité de commande (14) et qui agit de ce fait sur lesdits moyens de coupure (12) est associé audit bac (8).

7. Appareil selon une ou plusieurs des revendications précédentes, **caractérisé en ce qu'**il comprend un deuxième grill (36) qui est supporté par une structure (34) articulée sur ladite structure de base (2).

8. Appareil selon la revendication précédente, **caractérisé en ce que** ledit deuxième grill (36) est connecté à sa propre structure de support (34) par des barres (38) articulées en parallélogramme entre les deux.

9. Appareil selon la revendication précédente, **caractérisé en ce que** ces barres (38) appliquées sur le même côté du deuxième grill (36) sont connectées l'une à l'autre par une barre longitudinale (40).

10. Appareil selon une ou plusieurs des revendications 7 à 9, **caractérisé en ce que** la structure de support (34) dudit deuxième grill (36) est pourvue de moyens réglables (42, 44, 46) pour définir la position de fin de course inférieure dudit deuxième grill.

11. Appareil selon une ou plusieurs des revendications 7 à 10, **caractérisé en ce que** chaque grill (24, 36) est couvert, au moins pour les parties destinés à entrer en contact avec les aliments à cuire, d'une couche d'un matériau anti-adhérence.
